# EUROPEAN PATENT APPLICATION

(11) **EP 3 364 013 A1**
(43) Date of publication of application: **22.08.2018**
(21) Application number: 18156663.9
(22) Date of filing: 14.02.2018
(51) Int. Cl.: F02D 41/02, F01N 11/00, F02D 41/14, B01D 53/94

(54) **INTERNAL COMBUSTION ENGINE AND CONTROL METHOD FOR INTERNAL COMBUSTION ENGINE**

(30) Priority: 16.02.2017 JP 2017026813
(71) Applicant: Toyota Jidosha Kabushiki Kaisha, Aichi-Ken Aichi 471-8571 (JP)
(72) Inventor: NISHIJIMA, Hirokazu, Aichi-Ken Aichi 471-8571 (JP)
(74) Representative: D Young & Co LLP

(57) **Abstract**

At a time of an abnormality diagnosis for a NOx storage reduction catalyst (6), a predetermined fuel addition process is started when the temperature of the NOx storage reduction catalyst (6) is lower than a predetermined temperature and a NOx storage amount in the NOx storage reduction catalyst (6) is equal to or more than a predetermined storage amount. Then, the abnormality diagnosis for the NOx storage reduction catalyst (6) is performed based on a comparison between an integrated value of a NOx outflow amount after the predetermined fuel addition process is started and before the temperature of the NOx storage reduction catalyst (6) reaches the predetermined temperature and an integrated value of the NOx outflow amount after the temperature of the NOx storage reduction catalyst (6) reaches the predetermined temperature during the execution of the predetermined fuel addition process.

## Description

### BACKGROUND OF THE INVENTION

### 1. Field of the Invention

The invention relates to an internal combustion engine, and a control method for an internal combustion engine.

### 2. Description of Related Art

There is known a technology of providing a NOx storage reduction catalyst as an exhaust gas control catalyst in an exhaust passage of an internal combustion engine that performs a lean combustion operation while setting the air-fuel ratio of an air-fuel mixture to a lean air-fuel ratio that is an air-fuel ratio higher than a stoichiometric air-fuel ratio. The NOx storage reduction catalyst has a function to store NOx in exhaust gas when a peripheral atmosphere of the NOx storage reduction catalyst is a lean air-fuel ratio and to reduce the stored NOx when the air-fuel ratio of the peripheral atmosphere is a rich air-fuel ratio that is an air-fuel ratio lower than the stoichiometric air-fuel ratio and a reductant exists. In the present specification, the term "storage" is used as a term that includes a manner of "absorption".

Japanese Patent Application Publication No. 2014-202126 discloses a technology about a deterioration determination method for the NOx storage reduction catalyst. In the technology disclosed in Japanese Patent Application Publication No. 2014-202126, an ideal NOx storage amount is evaluated based on a storage map in the NOx storage reduction catalyst corresponding to aging deterioration, and an actual NOx storage amount is evaluated based on a detected value of a NOx sensor provided in an exhaust passage. Then, when the difference between the ideal NOx storage amount and the actual NOx storage amount is larger than a threshold, a desulfurization control for removing SOx stored in the NOx storage reduction catalyst is executed. After the desulfurization control is executed, the ideal NOx storage amount and the actual NOx storage amount are reevaluated. On this occasion, when the difference between the reevaluated ideal NOx storage amount and actual NOx storage amount is smaller than the threshold, it is determined that the NOx storage reduction catalyst has recovered from the SOx poisoning by the desulfurization control and it is determined that the NOx storage reduction catalyst is not abnormal. On the other hand, when the difference between the reevaluated ideal NOx storage amount and actual NOx storage amount is larger than the threshold, it is determined than the NOx storage reduction catalyst has thermally deteriorated.

Japanese Patent Application Publication No. 2015-042856 discloses a technology of producing a reducing intermediate in the NOx storage reduction catalyst by adding fuel in a cycle within a predefined range from a fuel addition valve (hydrocarbon supply valve) provided in an exhaust passage on an upstream side of the NOx storage reduction catalyst, and reducing NOx in exhaust gas using the reducing intermediate.

Japanese Patent Application Publication No. 2016-079852 discloses a technology about an abnormality diagnosis for a NOx selective reduction catalyst provided in an exhaust passage on a downstream side of the NOx storage reduction catalyst. Japanese Patent Application Publication No. 2015-190427 discloses a technology about a deterioration diagnosis for a NOx trapping unit that traps NOx in exhaust gas.

### SUMMARY OF THE INVENTION

When the deterioration of the NOx storage reduction catalyst advances, the amount of NOx that is stored in the NOx storage reduction catalyst decreases. Further, it is possible to estimate a NOx storage amount in the NOx storage reduction catalyst, based on a NOx inflow amount to the NOx storage reduction catalyst and a NOx outflow amount from the NOx storage reduction catalyst. Therefore, in some cases, similarly to the above technology described in Japanese Patent Application Publication No. 2014-202126, the abnormality diagnosis for the NOx storage reduction catalyst is performed using the estimated value of the NOx storage amount. However, when the degree of the deterioration of the NOx storage reduction catalyst is relatively small, the degree of the decrease in the NOx storage amount in the NOx storage reduction catalyst, which is the degree of the decrease caused by the deterioration, is also relatively small. Therefore, in the abnormality diagnosis technique in the related art, which uses the estimated value of the NOx storage amount, it is sometimes difficult to diagnose that the NOx storage reduction catalyst is abnormal, at a stage at which the degree of the deterioration is relatively small.

In an abnormality diagnosis for the NOx storage reduction catalyst provided in the exhaust passage of the internal combustion engine, the invention diagnoses that the NOx storage reduction catalyst is abnormal, even at a stage at which the degree of the deterioration is relatively small.

A first aspect of the invention is an internal combustion engine. The internal combustion engine includes: an exhaust passage; an exhaust gas control system that includes a NOx storage reduction catalyst provided in the exhaust passage, and a fuel addition valve provided in the exhaust passage on an upstream side of the NOx storage reduction catalyst, the fuel addition valve adding fuel in exhaust gas; and an electronic control unit. The electronic control unit is configured to estimate a NOx storage amount in the NOx storage reduction catalyst. The electronic control unit is configured to acquire a NOx outflow amount from the NOx storage reduction catalyst. The electronic control unit is configured to start a predetermined fuel addition process, when the temperature of the NOx storage reduction catalyst is lower than a predetermined temperature and the NOx storage amount estimated by the electronic control unit is equal to or more than a predetermined storage amount, the predetermined fuel addition process is a process of increasing the temperature of the NOx storage reduction catalyst by repeatedly adding the fuel from the fuel addition valve in a predetermined cycle. The electronic control unit is configured to diagnose whether the NOx storage reduction catalyst is normal or abnormal. The electronic control unit is configured to set a predetermined fuel addition amount and the predetermined cycle such that a lean air-fuel ratio is maintained during execution of the predetermined fuel addition process. The lean air-fuel ratio is an air-fuel ratio that allows NOx stored in the NOx storage reduction catalyst to be desorbed, and an average air-fuel ratio of the exhaust gas that flows into the NOx storage reduction catalyst is higher than a stoichiometric air-fuel ratio. The predetermined fuel addition amount is a fuel addition amount for one fuel addition in the predetermined fuel addition process. The electronic control unit is configured to diagnose that the NOx storage reduction catalyst is normal when a high-temperature NOx integrated amount is more than a low-temperature NOx integrated amount. The low-temperature NOx integrated amount is an integrated value of the NOx outflow amount that is acquired by the electronic control unit after the predetermined fuel addition process is started and before the temperature of the NOx storage reduction catalyst reaches the predetermined temperature. The high-temperature NOx integrated amount is an integrated value of the NOx outflow amount that is acquired by the electronic control unit after the temperature of the NOx storage reduction catalyst reaches the predetermined temperature during the execution of the predetermined fuel addition process. The electronic control unit is configured to diagnose that the NOx storage reduction catalyst is abnormal when the high-temperature NOx integrated amount is equal to or less than the low-temperature NOx integrated amount.

As for the relative relation between the amount of a low-temperature desorbed NOx and the amount of a high-temperature desorbed NOx when the NOx storage reduction catalyst is abnormal, the amount of the high-temperature desorbed NOx is equal to or less than the amount of the low-temperature desorbed NOx during the execution of the predetermined fuel addition process, even if the degree of the deterioration of the NOx storage reduction catalyst is relatively small. Therefore, according to the above configuration, it is possible to diagnose that the NOx storage reduction catalyst is abnormal, even at a stage at which the degree of the deterioration of the NOx storage reduction catalyst is relatively small.

Further, with the above configuration, whether the NOx storage reduction catalyst is normal or abnormal is diagnosed based on the comparison between the low-temperature NOx integrated amount and the high-temperature NOx integrated amount when the predetermined fuel addition process is executed. Therefore, it is possible to accurately perform the abnormality diagnosis for the NOx storage reduction catalyst, even if there is some difference between the actual NOx storage amount in the NOx storage reduction catalyst at the start of the predetermined fuel addition process and the NOx storage amount estimated by the electronic control unit.

Here, in the case where the NOx storage amount at the start time of the predetermined fuel addition process is large, NOx is more easily desorbed from the NOx storage reduction catalyst when the fuel is supplied to the NOx storage reduction catalyst, than in the case where the NOx storage amount is small. Therefore, in the case where the NOx storage amount at the start time of the predetermined fuel addition process is large, the low-temperature desorbed NOx increases more easily than in the case where the NOx storage amount is small. Hence, in the internal combustion engine, the electronic control unit may be configured to set the predetermined fuel addition amount such that the predetermined fuel addition amount is smaller as the NOx storage amount at the start time of the predetermined fuel addition process is larger, and to execute the predetermined fuel addition process, the NOx storage amount at the start time of the predetermined fuel addition process is estimated by the electronic control unit. With the above configuration, it is possible to prevent the high-temperature NOx integrated amount from being equal to or less than the low-temperature NOx integrated amount when the predetermined fuel addition process is executed, even though the NOx storage reduction catalyst is normal. Therefore, it is possible to prevent a diagnosis unit from wrongly diagnosing that the NOx storage reduction catalyst is abnormal, even though the NOx storage reduction catalyst is normal.

In the internal combustion engine, the electronic control unit may be configured to set the predetermined fuel addition amount and the predetermined cycle, in a range in which a reducing intermediate is produced by supplying the fuel to the NOx storage reduction catalyst, such that a produced amount of the reducing intermediate is an amount corresponding to a NOx inflow amount to the NOx storage reduction catalyst during the execution of the predetermined fuel addition process, and to execute the predetermined fuel addition process. It is possible to produce the reducing intermediate in the NOx storage reduction catalyst, by setting the fuel addition amount for one fuel addition and the predetermined cycle in the predetermined fuel addition process, in appropriate ranges. Then, by the reducing intermediate, it is possible to reduce NOx that newly flows into the NOx storage reduction catalyst together with the exhaust gas during the execution of the predetermined fuel addition process. As a result, it is possible to restrain, as much as possible, NOx other than the NOx desorbed from the NOx storage reduction catalyst by the execution of the predetermined fuel addition process (that is, the NOx that newly flows into the NOx storage reduction catalyst together with the exhaust gas during the execution of the predetermined fuel addition process), from being contained in the NOx outflow amount that is acquired by an acquisition unit during the execution of the predetermined fuel addition process. Therefore, it is possible to further enhance the accuracy of the abnormal diagnosis for the NOx storage reduction catalyst based on the comparison between the low-temperature NOx integrated amount and the high-temperature NOx integrated amount when the predetermined fuel addition process is executed.

In the internal combustion engine, the high-temperature NOx integrated amount may be an integrated value of the NOx outflow amount that is acquired by the electronic control unit after the temperature of the NOx storage reduction catalyst reaches the predetermined temperature during the execution of the predetermined fuel addition process and before a predetermined period elapses.

In the internal combustion engine, the predetermined period may be one of the following i), ii) and iii): i) a period in which all the NOx stored in the NOx storage reduction catalyst at a start time of the predetermined fuel addition process is desorbed, ii) a period that is defined based on an estimated value of the NOx storage amount in the NOx storage reduction catalyst at the start time of the predetermined fuel addition process, and iii) a period after the predetermined fuel addition process is started and before the temperature of the NOx storage reduction catalyst reaches an upper limit of a temperature that allows the NOx to be stored in the NOx storage reduction catalyst.

A second aspect of the invention is a control method for an internal combustion engine. The internal combustion engine includes: an exhaust passage; an exhaust gas control system that includes a NOx storage reduction catalyst provided in the exhaust passage, and a fuel addition valve provided in the exhaust passage on an upstream side of the NOx storage reduction catalyst, the fuel addition valve adding fuel in exhaust gas; and an electronic control unit. The control method includes: estimating, the electronic control unit, a NOx storage amount in the NOx storage reduction catalyst; acquiring, the electronic control unit, a NOx outflow amount from the NOx storage reduction catalyst; starting, the electronic control unit, a predetermined fuel addition process, when the temperature of the NOx storage reduction catalyst is lower than a predetermined temperature and the NOx storage amount estimated by the electronic control unit is equal to or more than a predetermined storage amount, the fuel addition process being a process of increasing the temperature of the NOx storage reduction catalyst by repeatedly adding the fuel from the fuel addition valve in a predetermined cycle; diagnosing, the electronic control unit, whether the NOx storage reduction catalyst is normal or abnormal; setting, the electronic control unit, a predetermined fuel addition amount and the predetermined cycle such that a lean air-fuel ratio is maintained during execution of the predetermined fuel addition process, the lean air-fuel ratio being an air-fuel ratio that allows NOx stored in the NOx storage reduction catalyst to be desorbed, an average air-fuel ratio of the exhaust gas that flows into the NOx storage reduction catalyst being higher than a stoichiometric air-fuel ratio, the predetermined fuel addition amount being a fuel addition amount for one fuel addition in the predetermined fuel addition process; diagnosing, the electronic control unit, that the NOx storage reduction catalyst is normal when a high-temperature NOx integrated amount is more than a low-temperature NOx integrated amount, the low-temperature NOx integrated amount being an integrated value of the NOx outflow amount that is acquired by the electronic control unit after the predetermined fuel addition process is started and before the temperature of the NOx storage reduction catalyst reaches the predetermined temperature, the high-temperature NOx integrated amount being an integrated value of the NOx outflow amount that is acquired by the electronic control unit after the temperature of the NOx storage reduction catalyst reaches the predetermined temperature during the execution of the predetermined fuel addition process; and diagnosing, the electronic control unit, that the NOx storage reduction catalyst is abnormal when the high-temperature NOx integrated amount is equal to or less than the low-temperature NOx integrated amount.

As for the relative relation between the amount of a low-temperature desorbed NOx and the amount of a high-temperature desorbed NOx when the NOx storage reduction catalyst is abnormal, the amount of the high-temperature desorbed NOx is equal to or less than the amount of the low-temperature desorbed NOx during the execution of the predetermined fuel addition process, even if the degree of the deterioration of the NOx storage reduction catalyst is relatively small. Therefore, according to the above configuration, it is possible to diagnose that the NOx storage reduction catalyst is abnormal, even at a stage at which the degree of the deterioration of the NOx storage reduction catalyst is relatively small.

Further, with the above configuration, whether the NOx storage reduction catalyst is normal or abnormal is diagnosed based on the comparison between the low-temperature NOx integrated amount and the high-temperature NOx integrated amount when the predetermined fuel addition process is executed. Therefore, it is possible to accurately perform the abnormality diagnosis for the NOx storage reduction catalyst, even if there is some difference between the actual NOx storage amount in the NOx storage reduction catalyst at the start of the predetermined fuel addition process and the NOx storage amount estimated by the electronic control unit.

With the invention, in the abnormality diagnosis for the NOx storage reduction catalyst provided in the exhaust passage of the internal combustion engine that performs the lean combustion operation, it is possible to diagnosis that the NOx storage reduction catalyst is abnormal, even at a stage at which the degree of the deterioration is relatively small.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing a schematic diagram of an air intake and exhaust system of an internal combustion engine according to an embodiment;
FIG. 2 is a time chart showing time shifts of a fuel addition timing, an air-fuel ratio A/Fin of an inflow exhaust gas, and a temperature Tc of a NOx storage reduction catalyst when a predetermined fuel addition process according to the embodiment is executed;
FIG. 3 is a diagram showing correlation between the temperature of the NOx storage reduction catalyst and a saturated NOx storage amount of the NOx storage reduction catalyst;
FIG. 4 is a first time chart for describing a time shift of a NOx concentration Rnoxout of an outflow exhaust gas when the predetermined fuel addition process according to the embodiment is executed;
FIG. 5 is a second time chart for describing a time shift of the NOx concentration Rnoxout of the outflow exhaust gas when the predetermined fuel addition process according to the embodiment is executed;
FIG. 6 is a flowchart showing a flow of an abnormality diagnosis for the NOx storage reduction catalyst according to the embodiment;
FIG. 7 is a diagram showing a correlation between a start storage amount Qnox and a one-addition amount Fadd in a predetermined fuel addition process according to a first modification of the embodiment;
FIG. 8 is a first diagram showing an oxidation-reduction reaction that is estimated to be caused in the NOx storage reduction catalyst when a predetermined fuel addition process according to a second modification of the embodiment is executed; and
FIG. 9 is a second diagram showing an oxidation-reduction reaction that is estimated to be caused in the NOx storage reduction catalyst when the predetermined fuel addition process according to the second modification of the embodiment is executed.

### DETAILED DESCRIPTION OF EMBODIMENTS

Hereinafter, a specific embodiment of the invention will be described based on the drawings. Dimensions, materials, shapes, relative dispositions and the like of component parts described in the embodiment are not intended to limit the technical scope of the invention unless otherwise mentioned.

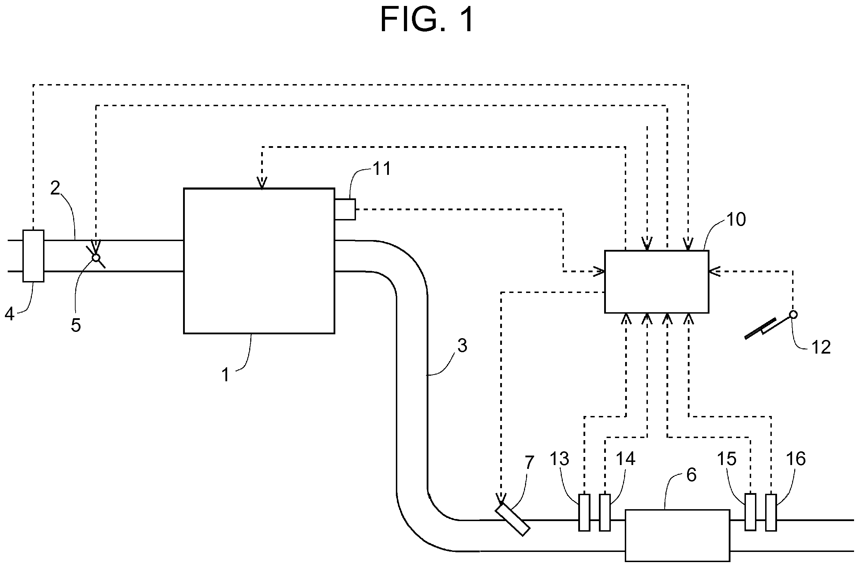

Here, a case where the invention is applied to a diesel engine for vehicle drive will be described as an example. FIG. 1 is a diagram showing a schematic configuration of an air intake and exhaust system of an internal combustion engine according to the embodiment. An internal combustion engine 1 is a diesel engine for vehicle drive. The invention can be also applied to a gasoline engine that performs a lean combustion operation.

The internal combustion engine 1 is connected with an intake passage 2 and an exhaust passage 3. The intake passage 2 is provided with an air flow meter 4. The air flow meter 4 detects an intake air flow meter of the internal combustion engine 1. Further, a throttle valve 5 is provided in the intake passage 2 on the downstream side of the air flow meter 4. The throttle valve 5 controls the intake air amount of the internal combustion engine 1, by changing the passage sectional area of the intake passage 2.

The exhaust passage 3 is provided with a NOx storage reduction catalyst (hereinafter, referred to as a NSR catalyst) 6 as an exhaust gas control catalyst. The exhaust passage 3 may be provided with a NOx selective reduction catalyst or a particulate filter, in addition to the NSR catalyst 6. A fuel addition valve 7 is provided in the exhaust passage 3 on the upstream side of the NSR catalyst 6. The fuel addition valve 7 adds fuel in exhaust gas. The fuel added from the fuel addition valve 7 is supplied to the NSR catalyst 6, together with the exhaust gas.

An upstream-side NOx sensor 13 and an air-fuel ratio sensor 14 are provided in the exhaust passage 3 on the downstream side of the fuel addition valve 7 and on the upstream side of the NSR catalyst 6. The upstream-side NOx sensor 13 detects the NOx concentration of an exhaust gas (hereinafter, referred to as an inflow exhaust gas) that flows into the NSR catalyst 6. The air-fuel ratio sensor 14 detects the air-fuel ratio of the inflow exhaust gas. A downstream-side NOx sensor 15 and a temperature sensor 16 are provided in the exhaust passage 3 on the downstream side of the NSR catalyst 6. The downstream-side NOx sensor 15 detects the NOx concentration of an exhaust gas (hereinafter, referred to as an outflow exhaust gas) that flows out of the NSR catalyst 6. The temperature sensor 16 detects the temperature of the outflow exhaust gas.

The internal combustion engine 1 is equipped with an electronic control unit (ECU) 10 for controlling the internal combustion engine 1. The ECU 10 is electrically connected with the air flow meter 4, the upstream-side NOx sensor 13, the air-fuel ratio sensor 14, the downstream-side NOx sensor 15 and the temperature sensor 16. Furthermore, the ECU 10 is electrically connected with a crank angle sensor 11 and an accelerator position sensor 12. The crank angle sensor 11 outputs a signal correlated with the crank angle of the internal combustion engine 1. The accelerator position sensor 12 outputs a signal correlated to the accelerator operation amount of a vehicle on which the internal combustion engine 1 is mounted.

Further, the detected value of each sensor is input to the ECU 10. The ECU 10 derives the engine speed of the internal combustion engine 1, based on the detected value of the crank angle sensor 11. The ECU 10 derives the engine load of the internal combustion engine 1, based on the detected value of the accelerator position sensor 12. The ECU 10 calculates a NOx inflow amount that is the amount of NOx to flow into the NSR catalyst 6, based on the detected values of the air flow meter 4 and the upstream-side NOx sensor 13. The ECU 10 calculates a NOx outflow amount that is the amount of NOx to flow out of the NSR catalyst 6, based on the detected values of the air flow meter 4 and the downstream-side NOx sensor 15. The ECU 10 calculates the temperature of the NSR catalyst 6, based on the detected value of the temperature sensor 16.

Furthermore, the ECU 10 is electrically connected with a fuel injection valve (not illustrated) of the internal combustion engine 1, the throttle valve 5 and the fuel addition valve 7. These devices are controlled by the ECU 10.

In an exhaust gas control system according to the embodiment, an abnormality diagnosis for the NSR catalyst 6 is performed. Hereinafter, a technique of the abnormality diagnosis for the NSR catalyst according to the embodiment will be described. In the embodiment, as described above, the ECU 10 calculates the NOx inflow amount to the NSR catalyst 6 and the NOx outflow amount from the NSR catalyst 6. Furthermore, the ECU 10 can estimate the NOx storage amount in the NSR catalyst 6, based on the calculated value of the NOx inflow amount and the NOx outflow amount. That is, the NOx inflow amount is adopted as an amount of increase in the NOx storage amount, the NOx outflow amount is adopted as an amount of decrease in the NOx storage amount, and they are integrated. Thereby, it is possible to estimate the NOx storage amount in the NSR catalyst 6. When the deterioration of the NSR catalyst 6 advances, the amount of NOx that is stored in the NSR catalyst 6 decreases, even if the NOx inflow amount is the same. As a result, the estimated value of the NOx storage amount in the NSR catalyst 6 decreases. Therefore, it may be possible to perform the abnormality diagnosis for the NSR catalyst 6 based on the estimated value of the NOx storage amount in the NSR catalyst 6. However, when the degree of the deterioration of the NSR catalyst 6 is relatively small, the degree of the decrease in the NOx storage amount in the NSR catalyst, which is the degree of the decrease caused by the deterioration, is also relatively small. Therefore, only based on the estimated value of the NOx storage amount, it is sometimes difficult to diagnose that the NSR catalyst 6 is abnormal, at a stage at which the degree of the deterioration is relatively small. Hence, in the abnormality diagnosis for the NSR catalyst in the embodiment, attention is focused on a fact that the manner of NOx desorption from the NSR catalyst differs depending on whether the NSR catalyst is normal or abnormal, when the fuel is repeatedly supplied to the NSR catalyst in a predetermined cycle in a state where the temperature of the NSR catalyst is low and where NOx is stored in the NSR catalyst.

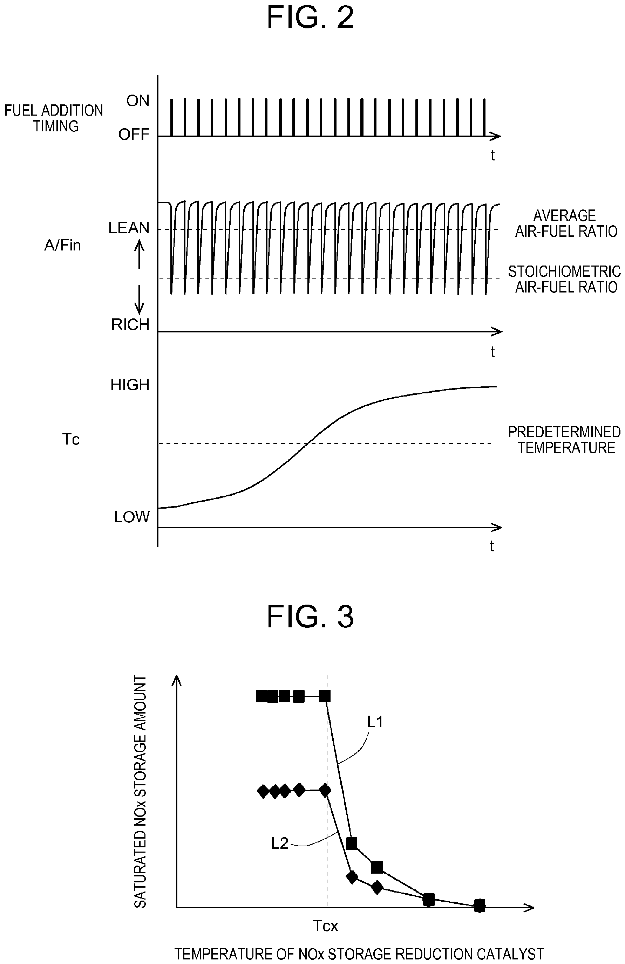

In the embodiment, at the time of the abnormality diagnosis for the NSR catalyst 6, the ECU 10 executes a predetermined fuel addition process of repeatedly adding the fuel from the fuel addition valve 7 in the predetermined cycle, when the temperature of the NSR catalyst 6 is lower than a predetermined temperature and the NOx storage amount in the NSR catalyst 6 is equal to or more than a predetermined storage amount. FIG. 2 is a time chart showing time shifts of a fuel addition timing, an air-fuel ratio A/Fin of the inflow exhaust gas, and a temperature Tc of the NSR catalyst 6 when a predetermined fuel addition process according to the embodiment is executed.

As shown in FIG. 2, when the predetermined fuel addition process is executed, the air-fuel ratio A/Fin of the inflow exhaust gas decreases corresponding to the cycle of the fuel addition from the fuel addition valve 7. At this time, a fuel addition amount for one fuel addition (hereinafter, referred to as a one-addition amount) and the predetermined cycle are set such that the decreased air-fuel ratio A/Fin of the inflow exhaust gas is a rich air-fuel ratio and the average air-fuel ratio A/Fin of the inflow exhaust gas during the execution of the predetermined fuel addition process is maintained at a lean air-fuel ratio. Further, when the predetermined fuel addition process is executed, the temperature Tc of the NSR catalyst 6 gradually increases due to an oxidation reaction of the fuel in the NSR catalyst 6. As a result, the temperature of the NSR catalyst 6 becomes higher than a predetermined temperature.

Here, a correlation between the temperature of the NSR catalyst and a saturated NOx storage amount of the NSR catalyst will be described based on FIG. 3. In FIG. 3, the abscissa axis indicates the temperature of the NSR catalyst, and the ordinate axis indicates the saturated NOx storage amount. Further, in FIG. 3, a line L1 indicates a correlation between the temperature of the NSR catalyst and the saturated NOx storage amount of the NSR catalyst when the NSR catalyst is normal, and a line L2 indicates a correlation between the temperature of the NSR catalyst and the saturated NOx storage amount of the NSR catalyst when the NSR catalyst is abnormal. As shown in FIG. 3, the saturated NOx storage amount of the NSR catalyst rapidly decreases after the temperature of the NSR catalyst reaches a certain temperature Tcx. The temperature of the NSR catalyst gradually increases from a temperature lower than the temperature Tcx and exceeds the temperature Tcx, so that the saturated NOx storage amount decreases. As a result, when the saturated NOx storage amount falls below the NOx storage amount in the NSR catalyst, the desorption of the stored NOx can occur, even if the NSR catalyst normal. That is, a high-temperature desorbed NOx can be produced. Further, as shown in FIG. 3, the temperature Tcx of the NSR catalyst at which the saturated NOx storage amount rapidly decreases does not greatly differ depending on whether the NSR catalyst is normal or abnormal.

Meanwhile, when the fuel, which is a reductant, is supplied to the NSR catalyst, the desorption of the stored NOx can occur, even if the NOx storage amount in the NSR catalyst is equal to or less than the saturated NOx storage amount. Therefore, when the predetermined fuel addition process is executed, the fuel is supplied to the NSR catalyst 6, and thereby, the desorption of the stored NOx can occur, even if the temperature of the NSR catalyst 6 is equal to or lower than the temperature Tcx and the NOx storage amount is equal to or less than the saturated NOx storage amount. That is, a low-temperature desorbed NOx can be produced.

Hence, in the embodiment, the predetermined temperature relevant to a start condition of the predetermined fuel addition process is set to the temperature Tcx in FIG. 3 at which the saturated NOx storage amount of the NSR catalyst 6 rapidly decreases. Thereby, NOx that is desorbed from the NSR catalyst 6 after the predetermined fuel addition process is started and before the temperature of the NSR catalyst 6 reaches the predetermined temperature Tcx can be regarded as the low-temperature desorbed NOx. Further, NOx that is desorbed from the NSR catalyst 6 after the temperature of the NSR catalyst 6 increases to the predetermined temperature Tcx or higher during the execution of the predetermined fuel addition process can be regarded as the high-temperature desorbed NOx.

In a state where the low-temperature desorbed NOx is produced, because of a low temperature of the NSR catalyst 6, the reducing ability of the NSR catalyst 6 cannot be sufficiently exerted even if the reductant (fuel) exists. Therefore, when the predetermined fuel addition process is executed and the low-temperature desorbed NOx is produced, some of the low-temperature desorbed NOx flows out of the NSR catalyst 6 without being reduced. Further, as described above, in the predetermined fuel addition process, the one-addition amount and the predetermined cycle are set such that the average air-fuel ratio of the inflow exhaust gas is maintained at a lean air-fuel ratio during the execution of the predetermined fuel addition process. Therefore, the amount of the fuel that is supplied to the NSR catalyst 6 per unit time during the execution of the predetermined fuel addition process is relatively small. Accordingly, in a state where the excess NOx over the saturated NOx storage amount is desorbed from the NSR catalyst 6 and the high-temperature desorbed NOx is produced, the amount of the reductant (fuel) to be supplied is insufficient relative to the amount of NOx to be desorbed. Therefore, when the high-temperature desorbed NOx is produced during the execution of the predetermined fuel addition process, some of the high-temperature desorbed NOx flows out of the NSR catalyst 6 without being reduced. That is, during the execution of the predetermined fuel addition process, some of the desorbed NOx flows out of the NSR catalyst 6, regardless of whether the desorbed NOx is the low-temperature desorbed NOx or the high-temperature desorbed NOx. Then, the NOx flowing out of the NSR catalyst 6 is detected by the downstream-side NOx sensor 15.

The deterioration of the NSR catalyst 6 makes it hard for NOx to be stored in an internal part of the NSR catalyst 6, and makes it easy for NOx to be stored in a surface part of the NSR catalyst 6. Therefore, by the deterioration of the NSR catalyst 6, the manner of the storage of NOx in the NSR catalyst 6 becomes a manner in which the desorption is easy. Accordingly, when the NSR catalyst 6 is abnormal, the NOx to be stored decreases and the low-temperature desorbed NOx is more easily produced at the time of the execution of the predetermined fuel addition process, compared to when the NSR catalyst 6 is normal. Further, when the proportion of the low-temperature desorbed NOx increases in the total amount of NOx that is desorbed out of the NSR catalyst 6 during the execution of the predetermined fuel addition process, the proportion of the high-temperature desorbed NOx decreases by that quantity. Accordingly, when the NSR catalyst 6 is abnormal, in the total amount of NOx that is desorbed out of the NSR catalyst during the execution of the predetermined fuel addition process, the proportion of the low-temperature desorbed NOx is likely to increase and the proportion of the high-temperature desorbed NOx is likely to decrease.

On the other hand, when the NSR catalyst 6 is normal, the low-temperature desorbed NOx is hard to be produced at the time of the execution of the predetermined fuel addition process. Further, when the proportion of the low-temperature desorbed NOx decreases in the total amount of NOx that is desorbed out of the NSR catalyst during the execution of the predetermined fuel addition process, the proportion of the high-temperature desorbed NOx increases by that quantity. Accordingly, when the NSR catalyst 6 is normal, in the total amount of NOx that is desorbed from the NSR catalyst 6 during the execution of the predetermined fuel addition process, the proportion of the low-temperature desorbed NOx is likely to decrease and the proportion of the high-temperature desorbed NOx is likely to increase. Hence, in the embodiment, the one-addition amount and predetermined cycle in the predetermined fuel addition process are previously set, such that the amount of the high-temperature desorbed NOx is more than the amount of the low-temperature desorbed NOx during the execution of the predetermined fuel addition process, when the NSR catalyst 6 is normal, and the amount of the high-temperature desorbed NOx is equal to or less than the amount of the low-temperature desorbed NOx during the execution of the predetermined fuel addition process, when the NSR catalyst 6 is abnormal. The one-addition amount and predetermined cycle in the predetermined fuel addition process can be evaluated based on experiments and the like.

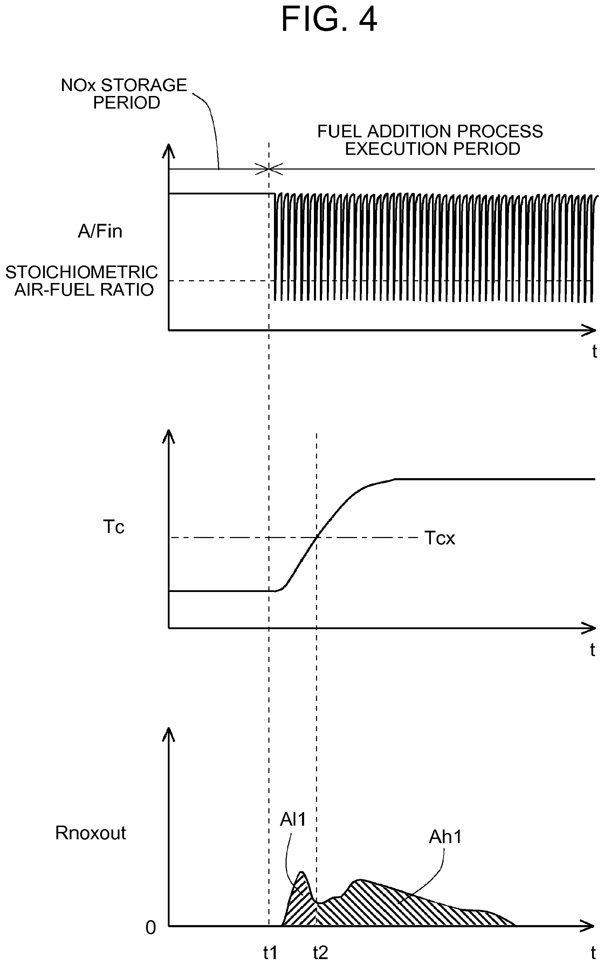

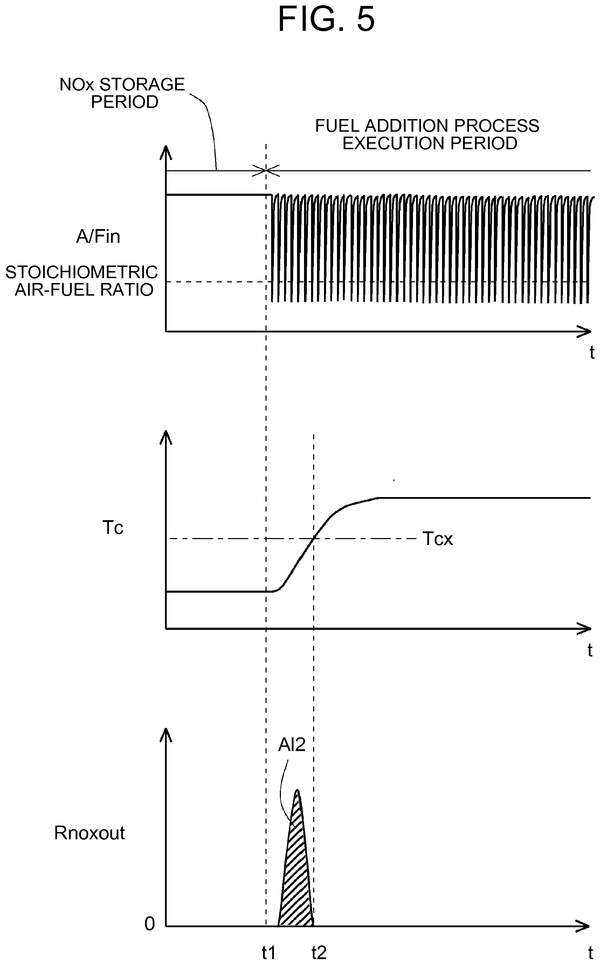

FIG. 4 and FIG. 5 are time charts for describing a time shift of a NOx concentration Rnoxout of the outflow exhaust gas when the predetermined fuel addition process according to the embodiment is executed. FIG. 4 shows a time shift when the NSR catalyst 6 is normal, and FIG. 5 shows a time shift when the NSR catalyst 6 is abnormal. The time shifts of the NOx concentration Rnoxout of the outflow exhaust gas shown in FIG. 4 and FIG. 5 are just examples in the respective cases. In FIG. 4 and FIG. 5, a period until time t1 is a period in which the fuel addition from the fuel addition valve 7 is not executed and NOx is stored in the NSR catalyst 6. In the NOx storage period, all NOx in the exhaust gas is stored in the NSR catalyst 6, and therefore, the NOx concentration Rnoxout of the outflow exhaust gas is zero. Then, the predetermined fuel addition process is started at time t1. Thereafter, at time t2, the temperature Tc of the NSR catalyst 6 reaches the predetermined temperature Tcx.

In FIG. 4, after the predetermined fuel addition process is started at time t1, the value of the NOx concentration Rnoxout of the outflow exhaust gas increases from zero. This is because the low-temperature desorbed NOx produced by the execution of the predetermined fuel addition process flows out of the NSR catalyst 6. Then, the value of the NOx concentration Rnoxout of the outflow exhaust gas reaches a peak, and thereafter, decreases once. This is because the outflow amount of the low-temperature desorbed NOx from the NSR catalyst 6 decreases. As described above, when the NSR catalyst 6 is normal, the low-temperature desorbed NOx is hard to be produced. Therefore, in FIG. 4, the peak value of the NOx concentration Rnoxout of the outflow exhaust gas before time t2 is not a very large value. Then, after time t2, the value of the NOx concentration Rnoxout of the outflow exhaust gas increases again. This is because the temperature Tc of the NSR catalyst 6 exceeds the predetermined temperature Tcx and the resulting high-temperature desorbed NOx flows out of the NSR catalyst 6. Then, after time t2, the value of the NOx concentration Rnoxout of the outflow exhaust gas is a larger value than zero, while the high-temperature desorbed NOx flows out of the NSR catalyst 6.

Accordingly, in the graph showing the time shift of the NOx concentration Rnoxout of the outflow exhaust gas in FIG. 4, the area of a portion (diagonal line portion All) shown by diagonal lines from time t1 to time t2 is correlated with the amount of the low-temperature desorbed NOx during the execution of the predetermined fuel addition process, and the area of a portion (diagonal line portion Ah1) shown by diagonal lines after time t2 is correlated with the amount of the high-temperature desorbed NOx during the execution of the predetermined fuel addition process. In FIG. 4, the area of the diagonal line portion Ah1 is larger than the area of the diagonal line portion Al1. That is, FIG. 4 shows that the amount of the high-temperature desorbed NOx is more than the amount of the low-temperature desorbed NOx during the execution of the predetermined fuel addition process, when the NSR catalyst 6 is normal.

Also in FIG. 5, after the predetermined fuel addition process is started at time t1, the low-temperature desorbed NOx flows out of the NSR catalyst 6, and therefore, the value of the NOx concentration Rnoxout of the outflow exhaust gas increases from zero. As described above, when the NSR catalyst 6 is abnormal, the low-temperature desorbed NOx is easy to be produced. Therefore, in FIG. 5, the value of the NOx concentration Rnoxout of the outflow exhaust gas before time t2 increases more greatly than in FIG. 4. In the case of FIG. 5, the value of the NOx concentration Rnoxout of the outflow exhaust gas reaches a peak value before time t2, and thereafter, decreases to zero. Then, after time t2, the value of the NOx concentration Rnoxout of the outflow exhaust gas is zero. This is because all NOx stored in the NSR catalyst 6 at the start time of the predetermined fuel addition process is desorbed as the low-temperature desorbed NOx so that the high-temperature desorbed NOx is not produced. Also in the graph showing the time shift of the NOx concentration Rnoxout of the outflow exhaust gas in FIG. 5, the area of a portion (diagonal line portion Al2) shown by diagonal lines from time t1 to time t2 is correlated with the amount of the low-temperature desorbed NOx during the execution of the predetermined fuel addition process. Accordingly, FIG. 5 shows that the amount of the high-temperature desorbed NOx is less than the amount of the low-temperature desorbed NOx during the execution of the predetermined fuel addition process, when the NSR catalyst 6 is abnormal.

Here, in the case where the rich degree of the inflow exhaust gas at the time of the addition of the fuel is too high or a period in which the inflow exhaust gas has a rich air-fuel ratio is too long when the fuel is added from the fuel addition valve 7 in a cycle, the increasing speed of the temperature of the NSR catalyst 6 becomes excessively high. In this case, it is difficult to distinguish between NOx that is desorbed from the NSR catalyst 6 due to the supply of the reductant (fuel) to the NSR catalyst 6 and NOx that is desorbed from the NSR catalyst 6 due to the increase in the temperature of the NSR catalyst 6. Furthermore, when a sufficient amount of reductant (fuel) exists relative to the amount of NOx to be desorbed, most of NOx is reduced, and in some cases, the desorbed NOx cannot be detected by the downstream-side NOx sensor 15. In such cases, it is difficult to perform the detection while distinguishing between the low-temperature desorbed NOx and the high-temperature desorbed NOx in a manner shown in FIG. 4 and FIG. 5. Therefore, in the abnormality diagnosis for the NSR catalyst 6, it is necessary to perform the above-described predetermined fuel addition process.

In the embodiment, the ECU 10 calculates a low-temperature NOx integrated amount by integrating the NOx outflow amount from the NSR catalyst 6 after the predetermined fuel addition process is started and before the temperature Tc of the NSR catalyst 6 reaches the predetermined temperature Tcx. Further, the ECU 10 calculates a high-temperature NOx integrated amount by integrating the NOx outflow amount from the NSR catalyst 6 after the temperature Tc of the NSR catalyst 6 reaches the predetermined temperature Tcx during the execution of the predetermined fuel addition process. On this occasion, when the amount of the high-temperature desorbed NOx is more than the amount of the low-temperature desorbed NOx during the execution of the predetermined fuel addition process, the high-temperature NOx integrated amount is more than the low-temperature NOx integrated amount. On the other hand, when the amount of the high-temperature desorbed NOx is equal to or less than the amount of the low-temperature desorbed NOx during the execution of the predetermined fuel addition process, the high-temperature NOx integrated amount is equal to or less than the low-temperature NOx integrated amount. Hence, the ECU 10 compares the low-temperature NOx integrated amount and the high-temperature NOx integrated amount, and thereby, diagnoses whether the NSR catalyst 6 is normal or abnormal. That is, when the high-temperature NOx integrated amount is more than the low-temperature NOx integrated amount, the ECU 10 diagnoses that the NSR catalyst is normal. On the other hand, when the high-temperature NOx integrated amount is equal to or less than the low-temperature NOx integrated amount, the ECU 10 diagnoses that the NSR catalyst is abnormal.

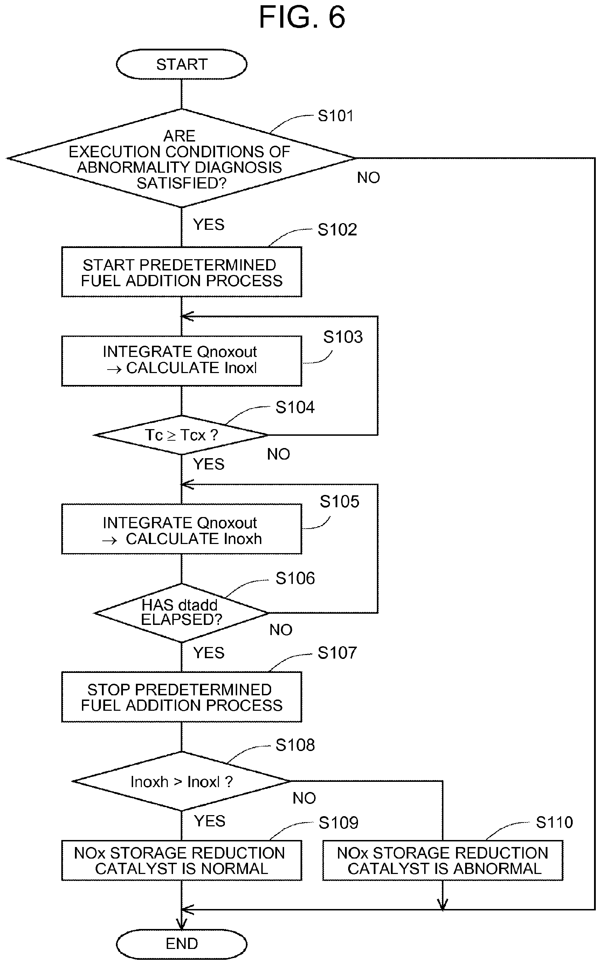

Next, a flow of the abnormality diagnosis for the NSR catalyst according to the embodiment will be described based on a flowchart shown in FIG. 6. In the embodiment, the flow is realized by executing a predetermined program stored in the ECU 10.

In the flow, first, in S101, it is determined whether execution conditions of the abnormality diagnosis for the NSR catalyst 6 are satisfied. Specifically, it is determined whether the temperature Tc of the NSR catalyst 6 is lower than the predetermined temperature Tcx and the NOx storage amount in the NSR catalyst 6 is equal to or more than a predetermined storage amount. Here, the predetermined storage amount is a storage amount that is less than the saturated NOx storage amount when the NSR catalyst 6 is abnormal and the temperature of the NSR catalyst 6 is the predetermined temperature Tcx and that allows the downstream-side NOx sensor 15 to detect the above-described difference in the desorption manner of NOx between the normal state and abnormal state of the NSR catalyst 6 when the predetermined fuel addition process is executed. Such a predetermined storage amount can be previously defined based on experiments and the like. As described above, the temperature of the NSR catalyst 6 and the NOx storage amount in the NSR catalyst 6 are estimated by the ECU 10, during the operation of the internal combustion engine 1. The execution condition of the abnormality diagnosis for the NSR catalyst may include a condition that the operating state of the internal combustion engine 1 is a steady state, a condition that a predetermined period has elapsed since the last execution of the abnormality diagnosis for the NSR catalyst 6, or the like. In the case of the negative determination in S101, the flow is once ended.

On the other hand, in the case of the positive determination in S101, the above-described predetermined fuel addition process is started in S102. For executing the abnormality diagnosis for the NSR catalyst 6, all NOx stored in the NSR catalyst 6 may be once reduced by a so-called rich spike process. Thereafter, NOx may be stored in the NSR catalyst 6 again, and the predetermined fuel addition process may be started after the NOx storage amount reaches a predetermined storage amount in a state where the temperature of the NSR catalyst 6 is lower than a predetermined temperature.

After the predetermined fuel addition process is started in S102, the integration of a NOx outflow amount Qnoxout is started in S103. Thereby, a low-temperature NOx integrated amount Inoxl is calculated. Next, in S104, it is determined whether the temperature Tc of the NSR catalyst 6 has increased to the predetermined temperature Tcx. In the case of the negative determination in S104, that is, in the case where the temperature Tc of the NSR catalyst 6 has not yet reached the predetermined temperature Tcx, the process of S103 is executed again. That is, the integration of the NOx outflow amount Qnoxout in S103 is repeated until the temperature Tc of the NSR catalyst 6 reaches the predetermined temperature Tcx, and thereby, the low-temperature NOx integrated amount Inoxl is calculated.

On the other hand, in the case of the positive determination in S104, the integration of the NOx outflow amount Qnoxout after the temperature Tc of the NSR catalyst 6 reaches the predetermined temperature Tcx is started in S105. Thereby, a high-temperature NOx integrated amount Inoxh is calculated. Next, in S106, it is determined whether a predetermined addition execution period dtadd has elapsed since the start of the predetermined fuel addition process. Here, the predetermined addition execution period dtadd is set to a period that is sufficient to desorb all NOx stored in the NSR catalyst 6 at the start time of the predetermined fuel addition process. The predetermined addition execution period dtadd may be a constant value that is previously defined based on experiments and the like. The predetermined addition execution period dtadd may be defined based on an estimated value of the NOx storage amount in the NSR catalyst 6 at the start time of the predetermined fuel addition process. The predetermined addition execution period dtadd may be set to a period after the predetermined fuel addition process is started and before the temperature Tc of the NSR catalyst 6 reaches an upper limit of the temperature that allows NOx to be stored in the NSR catalyst 6. In the case of the negative determination in S105, the process of S105 is executed again. That is, the integration of the NOx outflow amount Qnoxout in S105 is repeated until the predetermined addition execution period dtadd has elapsed since the start of the predetermined fuel addition process, and thereby, the high-temperature NOx integrated amount Inoxh is calculated.

On the other hand, in the case of the positive determination in S106, the predetermined fuel addition process is stopped in S107. Next, in S108, it is determined whether the high-temperature NOx integrated amount Inoxh calculated in S107 is more than the low-temperature NOx integrated amount Inoxl calculated in S103. In the case of the positive determination in S108, the NSR catalyst 6 is diagnosed as being normal in S109. On the other hand, in the case of the negative determination in S108, that is, in the case where the high-temperature NOx integrated amount Inoxh is equal to or less than the low-temperature NOx integrated amount Inoxl, the NSR catalyst 6 is diagnosed as being abnormal in S110.

In the flow, the NOx outflow amount Qnoxout is integrated after the temperature Tc of the NSR catalyst 6 reaches the predetermined temperature Tcx and before the elapsed time from the start time of the predetermined fuel addition process becomes the predetermined addition execution period dtadd, and thereby, the high-temperature NOx integrated amount Inoxh is calculated. Thereafter, the low-temperature NOx integrated amount Inoxl and the high-temperature NOx integrated amount Inoxh are compared. However, in some cases, the integrated value of the NOx outflow amount Qnoxout after the temperature Tc of the NSR catalyst 6 reaches the predetermined temperature Tcx exceeds the low-temperature NOx integrated amount Inox calculated in S103, before the elapsed time from the start time of the predetermined fuel addition process reaches the predetermined addition execution period dtadd. In this case, it is may be determined that the NSR catalyst 6 is normal, at the time point when the integrated value of the NOx outflow amount Qnoxout after the temperature Tc of the NSR catalyst 6 reaches the predetermined temperature Tcx exceeds the low-temperature NOx integrated amount Inox. Further, the predetermined fuel addition process may be stopped at the time point.

As described above, when the NSR catalyst 6 is normal, the amount of the high-temperature desorbed NOx is more than the amount of the low-temperature desorbed NOx during the execution of the predetermined fuel addition process. Meanwhile, when the predetermined fuel addition process is executed, the low-temperature desorbed NOx easily increases, even if the degree of the deterioration of the NSR catalyst 6 is relatively small. Therefore, the relative relation between the amount of the low-temperature desorbed NOx and the amount of the high-temperature desorbed NOx is the above-described relation when the NSR catalyst 6 is abnormal, even if the degree of the deterioration of the NSR catalyst 6 is relatively small. That is, the amount of the high-temperature desorbed NOx is equal to or less than the amount of the low-temperature desorbed NOx during the execution of the predetermined fuel addition process, even if the degree of the deterioration of the NSR catalyst 6 is relatively small. The relative relation between the amount of the low-temperature desorbed NOx and the amount of the high-temperature desorbed NOx is reflected on the relative relation between the low-temperature NOx integrated amount Inoxl and the high-temperature NOx integrated amount Inoxh. Accordingly, in the abnormality diagnosis technique for the NSR catalyst 6 according to the embodiment, by performing the abnormality diagnosis based on the relative relation between the low-temperature NOx integrated amount Inoxl and the high-temperature NOx integrated amount Inoxh, it is possible to diagnose that the NSR catalyst 6 is abnormal, even at a stage at which the degree of the deterioration of the NSR catalyst 6 is relatively small.

Further, the relative relation between the low-temperature NOx integrated amount Inoxl and the high-temperature NOx integrated amount Inoxh depends on the state of the NSR catalyst 6, and does not vary even if there is some difference between the estimated value of the NOx storage amount in the NSR catalyst 6, which is calculated by the ECU 10, and the actual NOx storage amount. That is, when the NSR catalyst 6 is normal, the relative relation between the low-temperature NOx integrated amount Inoxl and the high-temperature NOx integrated amount Inoxh remains a relation at the normal time, and when the NSR catalyst 6 is abnormal, the relative relation between the low-temperature NOx integrated amount Inoxl and the high-temperature NOx integrated amount Inoxh remains a relation at the abnormal time. Therefore, in the technique of the abnormality diagnosis for the NSR catalyst 6 according to the embodiment, it is possible to accurately perform the abnormality diagnosis for the NSR catalyst 6, even if there is some difference between the estimated value of the NOx storage amount in the NSR catalyst 6 and the actual NOx storage amount.

In the embodiment, the ECU 10 estimates the NOx storage amount in the NSR catalyst 6, and thereby, an estimation unit according to the invention is realized. Further, the ECU 10 calculates the NOx outflow amount, and thereby, an acquisition unit according to the invention is realized. Further, the ECU 10 performs the predetermined fuel addition process, using the fuel addition valve 7, and thereby, a fuel addition process execution unit according to the invention is realized. Further, the ECU 10 executes the process of S109 or S110 in the flow shown in FIG. 6, and thereby, a diagnosis unit according to the invention is realized.

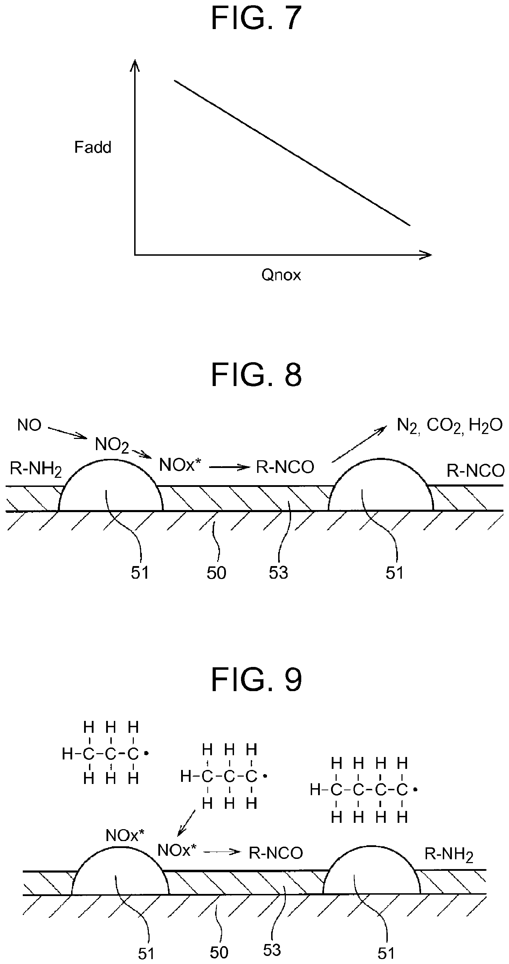

The one-addition amount and predetermined cycle in the predetermined fuel addition process according to the embodiment does not need to be always constant values. For example, the one-addition amount in the predetermined fuel addition process may be set depending on the NOx storage amount in the NSR catalyst 6 at the start time of the predetermined fuel addition process (hereinafter, the NOx storage amount at this time point is referred to as "start storage amount"). FIG. 7 is a diagram showing a correlation between a start storage amount Qnox and a one-addition amount Fadd in a modification of the embodiment. As shown in FIG. 7, in the modification, the one-addition amount Fadd is set to a smaller amount as the start storage amount Qnox is larger.

Here, in the case where the start storage amount is large, NOx is more easily desorbed from the NSR catalyst 6 when the fuel is supplied to the NSR catalyst 6, than in the case where the start storage amount is small. Therefore, in the case where the start storage amount is large, the low-temperature desorbed NOx increases more easily than in the case where the start storage amount is small. In the case where the NSR catalyst 6 is normal, when the amount of the low-temperature desorbed NOx excessively increases at the time of the execution of the predetermined fuel addition process, there is a concern that the high-temperature NOx integrated amount becomes equal to or less than the low-temperature NOx integrated amount even though the NSR catalyst 6 is normal. Hence, in the modification, as described above, the one-addition amount Fadd is set to a smaller amount as the start storage amount Qnox is larger, and the predetermined fuel addition process is performed.

When the one-addition amount Fadd is small, the low-temperature desorbed NOx is hard to be produced. Therefore, the one-addition amount Fadd is set to a smaller amount as the start storage amount Qnox is larger, and thereby, it is possible to prevent the amount of the low-temperature desorbed NOx from excessively increasing when the NSR catalyst 6 is normal. As a result, it is possible to prevent the high-temperature NOx integrated amount from being equal to or less than the low-temperature NOx integrated amount even though the NSR catalyst 6 is normal. Thereby, it is possible to prevent the NSR catalyst 6 from being wrongly diagnosed as being abnormal, even though the NSR catalyst 6 is normal.

Further, it is possible to produce a reducing intermediate in the NSR catalyst 6, by setting the one-addition amount and predetermined cycle in the predetermined fuel addition process, in appropriate ranges. Then, it is possible to reduce NOx by the produced reducing intermediate. In the following, the mechanism will be described based on FIG. 8 and FIG. 9.

FIG. 8 and FIG. 9 show a surface portion of a catalyst carrier 50 of the NSR catalyst 6. FIG. 8 and FIG. 9 show reactions that are estimated to be caused when the predetermined fuel addition process is performed while the one-addition amount and the predetermined cycle are set in ranges according to the modification. FIG. 8 shows a case where the fuel added from the fuel addition valve 7 is not supplied to the NSR catalyst 6, that is, a case where the air-fuel ratio of the inflow exhaust gas is a lean air-fuel ratio. On the other hand, FIG. 9 shows a case where the fuel added from the fuel addition valve 7 is supplied to the NSR catalyst 6, that is, a case where the air-fuel ratio of the inflow exhaust gas is a rich air-fuel ratio.

In the NSR catalyst 6, for example, a precious metal catalyst 51 composed of platinum Pt is supported on the catalyst carrier 50 composed of alumina. Furthermore, on the catalyst carrier 50, there is formed a basic layer 53 containing at least one selected from the group consisting of alkali metals such as potassium K, sodium Na and cesium Cs, alkali-earth metals such as barium Ba and calcium Ca, rare-earth elements such as lanthanide, and metals capable of donating an electron to NOx, as exemplified by silver Ag, copper Cu, iron Fe and iridium Ir. On the catalyst carrier 50, rhodium Rh or palladium Pd may be supported, in addition to platinum Pt.

As shown in FIG. 8, when the air-fuel ratio of the inflow exhaust gas is a lean air-fuel ratio, some of the NO in the exhaust gas is oxidized on the platinum Pt 51 supported by the catalyst carrier 50 to become NO₂, and NO₂ is further oxidized to become NO₃. Further, some of NO₂ becomes NO₂⁻. Accordingly, on the platinum Pt, NO₂⁻ and NO₃ are produced. NO attached on the NSR catalyst 6 and NO₂⁻ and NO₃ produced on the platinum Pt 51 have high activities. Hereinafter, these NO, NO₂- and NO₃ are referred to as active NOx*.

On the other hand, when the fuel added from the fuel addition valve 7 is supplied to the NSR catalyst 6 so that the air-fuel ratio of the inflow exhaust gas becomes a rich air-fuel ratio, some of hydrocarbon HC contained in the fuel is modified to become a radical, although most of the hydrocarbon HC is burned by an oxidation reaction. Accordingly, as shown in FIG. 9, the hydrocarbon concentration around the active NOx* increases. Then, when a high oxygen concentration around the active NOx* is continued for a certain time or more after the active NOx* is generated, the active NOx* is oxidized and is absorbed into the basic layer 53 as nitrate ions NO₃⁻. However, when the hydrocarbon concentration around the active NOx* increases again before the elapse of the certain time, the active NOx*, as shown in FIG. 9, reacts with the radical hydrocarbon HC on the platinum Pt 51, so that a reducing intermediate is produced. The reducing intermediate is attached or absorbed on a surface of the basic layer 53.

It is thought that the first reducing intermediate to be produced at this time is a nitro compound R-NO₂. The nitro compound R-NO₂, after the production, becomes a nitryl compound R-CN, and the nitryl compound R-CN immediately becomes an isocyanate compound R-NCO because the nitryl compound R-CN can exist only for a moment. The isocyanate compound R-NCO becomes an amine compound R-NH₂, by hydrolysis. However, in this case, it is thought that only some of the isocyanate compound R-NCO is hydrolyzed. Accordingly, as shown in FIG. 9, most of the reducing intermediate attached or absorbed on the surface of the basic layer 53 is composed of the isocyanate compound R-NCO and the amine compound R-NH₂.

On the other hand, when the hydrocarbon HC is attached around the produced reducing intermediate as shown FIG. 9, the reducing intermediate is blocked by the hydrocarbon HC, and the reaction does not proceed any more. In this case, the concentration of the hydrocarbon HC in the inflow exhaust gas decreases, and subsequently, the hydrocarbon HC attached around the reducing intermediate is oxidized and eliminated. When the oxygen concentration around the reducing intermediate increases as a result, the reducing intermediate reacts with the NOx or active NOx* in the exhaust gas, reacts with oxygen in the periphery, or decomposes by itself. Thereby, the reducing intermediate composed of R-NCO and R-NH₂ is transformed into N₂, CO₂, H₂O. Thus, NOx is reduced by the reducing intermediate.

As described above, in the NSR catalyst 6, the reducing intermediate is produced by the increase in the hydrocarbon concentration of the inflow exhaust gas, and thereafter, when the hydrocarbon concentration of the inflow exhaust gas decreases and the oxygen concentration of the inflow exhaust gas increases, NOx is reduced by the reducing intermediate. Accordingly, for producing the reducing intermediate and reducing NOx by the reducing intermediate in the NSR catalyst 6, it is necessary to change the hydrocarbon concentration of the inflow exhaust gas in a cycle.

Furthermore, in this case, it is necessary to increase the hydrocarbon concentration of the inflow exhaust gas to a sufficiently high concentration allowing the reducing intermediate to be produced, and it is necessary to decrease the hydrocarbon concentration of the inflow exhaust gas to a sufficiently low concentration allowing the produced reducing intermediate to react with the NOx, active NOx* and oxygen in the exhaust gas or decompose by itself. Further, when the cycle of the supply of the hydrocarbon HC is long, a period in which the oxygen concentration increases after a supply of the hydrocarbon HC and before the next supply of the hydrocarbon HC is long. As a result, the active NOx* is absorbed into the basic layer 53 as nitrates, without producing the reducing intermediate. Accordingly, for reducing NOx by the reducing intermediate, it is necessary to change the air-fuel ratio of the inflow exhaust gas with an appropriate amplitude and an appropriate cycle. Hence, in the modification, the one-addition amount and predetermined cycle in the predetermined fuel addition process are set such that the air-fuel ratio of the inflow exhaust gas is changed with an appropriate amplitude and an appropriate cycle.

Furthermore, in the modification, the one-addition amount and predetermined cycle in the predetermined fuel addition process are set such that the produced amount of the reducing intermediate for reducing NOx is an amount corresponding to the NOx inflow amount to the NSR catalyst 6 during the execution of the predetermined fuel addition process. Here, when the reducing intermediate is produced in the NSR catalyst 6 by the predetermined fuel addition process, the produced amount of the reducing intermediate is larger as the one-addition amount in the predetermined fuel addition process is larger. Further, the produced amount of the reducing intermediate is larger as the cycle of the fuel addition in the predetermined fuel addition process is shorter. Hence, a correlation between the one-addition amount and predetermined cycle in the predetermined fuel addition process and the produced amount of the reducing intermediate is previously evaluated based on experiments and the like, and the correlation is previously stored in the ECU 10 as a map or a function. Then, the ECU 10 sets the one-addition amount and predetermined cycle in the predetermined fuel addition process, using the map or the function.

The predetermined fuel addition process is executed such that the produced amount of the reducing intermediate is an amount corresponding to the NOx inflow amount during the execution of the predetermined fuel addition process, and therefore, by the reducing intermediate, it is possible to reduce NOx that newly flows into the NSR catalyst 6 together with the exhaust gas during the execution of the predetermined fuel addition process. As a result, it is possible to restrain the NOx that newly flows into the NSR catalyst 6, from passing through the NSR catalyst 6, flowing out of the NSR catalyst 6, and being detected by the downstream-side NOx sensor 15. Thereby, it is possible to restrain, as much as possible, NOx other than the NOx desorbed from the NSR catalyst 6 by the execution of the predetermined fuel addition process (that is, the NOx that newly flows into the NSR catalyst 6 together with the exhaust gas during the execution of the predetermined fuel addition process), from being contained in the NOx outflow amount that is calculated based on the detected value of the downstream-side NOx sensor 15, during the execution of the predetermined fuel addition process. As a result, the correlation between the amount of the low-temperature desorbed NOx and the low-temperature NOx integrated amount during the execution of the predetermined fuel addition process becomes higher. Further, the correlation between the amount of the high-temperature desorbed NOx and the high-temperature NOx integrated amount during the execution of the predetermined fuel addition process becomes higher. Therefore, it is possible to further enhance the accuracy of the abnormality diagnosis for the NSR catalyst 6 based on the comparison between the low-temperature NOx integrated amount and the high-temperature NOx integrated amount when the predetermined fuel addition process is executed.

## Claims

1. An internal combustion engine (1) comprising:
an exhaust passage (3);
an exhaust gas control system that includes a NOx storage reduction catalyst (6) provided in the exhaust passage (3), and a fuel addition valve (7) provided in the exhaust passage (3) on an upstream side of the NOx storage reduction catalyst (6), the fuel addition valve (7) adding fuel in exhaust gas; and
an electronic control unit (10),
the electronic control unit (10) being configured to estimate a NOx storage amount in the NOx storage reduction catalyst (6),
the electronic control unit (10) being configured to acquire a NOx outflow amount from the NOx storage reduction catalyst (6),
the electronic control unit (10) being configured to start a predetermined fuel addition process, when a temperature of the NOx storage reduction catalyst (6) is lower than a predetermined temperature and the NOx storage amount estimated by the electronic control unit (10) is equal to or more than a predetermined storage amount, the predetermined fuel addition process being a process of increasing the temperature of the NOx storage reduction catalyst (6) by repeatedly adding the fuel from the fuel addition valve (7) in a predetermined cycle,
the electronic control unit (10) being configured to diagnose whether the NOx storage reduction catalyst (6) is normal or abnormal,
the electronic control unit (10) being configured to set a predetermined fuel addition amount and the predetermined cycle such that a lean air-fuel ratio is maintained during execution of the predetermined fuel addition process, the lean air-fuel ratio being an air-fuel ratio that allows NOx stored in the NOx storage reduction catalyst (6) to be desorbed, an average air-fuel ratio of the exhaust gas that flows into the NOx storage reduction catalyst (6) being higher than a stoichiometric air-fuel ratio, the predetermined fuel addition amount being a fuel addition amount for one fuel addition in the predetermined fuel addition process,
the electronic control unit (10) being configured to diagnose that the NOx storage reduction catalyst (6) is normal when a high-temperature NOx integrated amount is more than a low-temperature NOx integrated amount,
the low-temperature NOx integrated amount being an integrated value of the NOx outflow amount that is acquired by the electronic control unit (10) after the predetermined fuel addition process is started and before the temperature of the NOx storage reduction catalyst (6) reaches the predetermined temperature,
the high-temperature NOx integrated amount being an integrated value of the NOx outflow amount that is acquired by the electronic control unit (10) after the temperature of the NOx storage reduction catalyst (6) reaches the predetermined temperature during the execution of the predetermined fuel addition process,
the electronic control unit (10) being configured to diagnose that the NOx storage reduction catalyst(6) is abnormal when the high-temperature NOx integrated amount is equal to or less than the low-temperature NOx integrated amount.

2. The internal combustion engine (1) according to claim 1, wherein
the electronic control unit (10) is configured to set the predetermined fuel addition amount such that the predetermined fuel addition amount is smaller as the NOx storage amount at a start time of the predetermined fuel addition process is larger, and to execute the predetermined fuel addition process,
the NOx storage amount at the start time of the predetermined fuel addition process is estimated by the electronic control unit (10).

3. The internal combustion engine (1) according to claim 1 or 2, wherein
the electronic control unit (10) is configured to set the predetermined fuel addition amount and the predetermined cycle, in a range in which a reducing intermediate is produced by supplying the fuel to the NOx storage reduction catalyst (6), such that a produced amount of the reducing intermediate is an amount corresponding to a NOx inflow amount to the NOx storage reduction catalyst (6) during the execution of the predetermined fuel addition process, and to execute the predetermined fuel addition process.

4. The internal combustion engine (1) according to claim 1, wherein
the high-temperature NOx integrated amount is an integrated value of the NOx outflow amount that is acquired by the electronic control unit (10) after the temperature of the NOx storage reduction catalyst (6) reaches the predetermined temperature during the execution of the predetermined fuel addition process and before a predetermined period elapses.

5. The internal combustion engine (1) according to claim 4, wherein
the predetermined period is one of the following i), ii) and iii):
i) a period in which all the NOx stored in the NOx storage reduction catalyst (6) at a start time of the predetermined fuel addition process is desorbed,
ii) a period that is defined based on an estimated value of the NOx storage amount in the NOx storage reduction catalyst (6) at the start time of the predetermined fuel addition process, and
iii) a period after the predetermined fuel addition process is started and before the temperature of the NOx storage reduction catalyst (6) reaches an upper limit of a temperature that allows the NOx to be stored in the NOx storage reduction catalyst (6).

6. A control method for an internal combustion engine (1),
the internal combustion engine (1) including
an exhaust passage (3),
an exhaust gas control system that includes a NOx storage reduction catalyst (6) provided in the exhaust passage (3), and a fuel addition valve (7) provided in the exhaust passage (3) on an upstream side of the NOx storage reduction catalyst (6), the fuel addition valve (7) adding fuel in exhaust gas, and
an electronic control unit (10),
the control method comprising:
estimating, the electronic control unit (10), a NOx storage amount in the NOx storage reduction catalyst (6);
acquiring, the electronic control unit (10), a NOx outflow amount from the NOx storage reduction catalyst (6);
starting, the electronic control unit (10), a predetermined fuel addition process, when a temperature of the NOx storage reduction catalyst (6) is lower than a predetermined temperature and the NOx storage amount estimated by the electronic control unit (10) is equal to or more than a predetermined storage amount, the predetermined fuel addition process being a process of increasing the temperature of the NOx storage reduction catalyst (6) by repeatedly adding the fuel from the fuel addition valve (7) in a predetermined cycle;
diagnosing, the electronic control unit (10), whether the NOx storage reduction catalyst (6) is normal or abnormal;
setting, the electronic control unit (10), a predetermined fuel addition amount and the predetermined cycle such that a lean air-fuel ratio is maintained during execution of the predetermined fuel addition process, the lean air-fuel ratio being an air-fuel ratio that allows NOx stored in the NOx storage reduction catalyst (6) to be desorbed, an average air-fuel ratio of the exhaust gas that flows into the NOx storage reduction catalyst (6) being higher than a stoichiometric air-fuel ratio, the predetermined fuel addition amount being a fuel addition amount for one fuel addition in the predetermined fuel addition process;
diagnosing, the electronic control unit (10), that the NOx storage reduction catalyst (6) is normal when a high-temperature NOx integrated amount is more than a low-temperature NOx integrated amount, the low-temperature NOx integrated amount being an integrated value of the NOx outflow amount that is acquired by the electronic control unit (10) after the predetermined fuel addition process is started and before the temperature of the NOx storage reduction catalyst (6) reaches the predetermined temperature, the high-temperature NOx integrated amount being an integrated value of the NOx outflow amount that is acquired by the electronic control unit (10) after the temperature of the NOx storage reduction catalyst (6) reaches the predetermined temperature during the execution of the predetermined fuel addition process; and
diagnosing, the electronic control unit (10), that the NOx storage reduction catalyst (6) is abnormal when the high-temperature NOx integrated amount is equal to or less than the low-temperature NOx integrated amount.
